Europäisches Patentamt

European Patent Office

Office européen des brevets

(11) Publication number : **0 477 146 A2**

(12) **EUROPEAN PATENT APPLICATION**

(21) Application number : **91830372.8**

(22) Date of filing : **10.09.91**

(51) Int. Cl.⁵ : **F16F 15/12**

(30) Priority : **20.09.90 IT 5324390 U**

(43) Date of publication of application :
**25.03.92 Bulletin 92/13**

(84) Designated Contracting States :
**AT BE CH DE DK ES FR GB GR IT LI LU NL SE**

(71) Applicant : **C.T.M. CINOTTO
TECNOMECCANICA S.p.A.
Strada Statale 460
I-10087 Valperga (Torino) (IT)**

(72) Inventor : **Cinotto, Vittorio
Via Torino 32
I-10082 Courgne (Torino) (IT)**

(74) Representative : **Buzzi, Franco et al
c/o Jacobacci-Casetta & Perani S.p.A. Via
Alfieri, 17
I-10121 Torino (IT)**

(54) **A torsional vibration damper with a pulley for a transmission belt.**

(57) A damper for damping torsional vibrations includes an annular vibration-damping mass connected, with the interposition of a ring of elastomeric material, to the periphery of a cup-shaped flange. The flange is fixed coaxially and firmly to the end face of a pulley which is also cup-shaped and around which a transmission belt is intended to pass.

FIG. 1

The present invention relates to a torsional vibration damper for shafts, of the type including an annular flywheel mass connected, with the interposition of an element of elastomeric material, to a flange which can be fitted on a shaft.

Dampers of the type indicated above are used widely in the automotive field and are usually fitted on one end of the driving shaft.

Grooves are formed on the flywheel or vibration damping mass for a POLY-V or normal trapezoidal-sectioned transmission belt for driving auxiliary members of the engine, such as, for example, the water pump, the alternator, and the power steering.

As a result of the amplification due to the elastomeric element, the amplitudes of the vibrations of the flywheel mass are higher than those of the flange of the damper and this results in very small slippages of the belt relative to the grooves in the flywheel mass. The vibrations therefore cause the belt to wear out very quickly. Rapid wear is also caused, moreover, by the thermal expansion of the elastomeric element which, according to its particular profile, may displace the flywheel mass axially relative to the flange causing the misalignment of the pulleys which drive the auxiliary members.

The object of the present invention is to provide a device of the type specified at the beginning of the description which does not have the aforesaid disadvantages and which is simple and cheap to produce.

According to the invention, this object is achieved by virtue of the fact that the device also includes a pulley which is fixed firmly to the flange and around which a transmission belt can pass.

By virtue of these characteristics, the damping function is independent of the transmission of the drive from the damper to the auxiliary members and the wear of the transmission belts is thus considerably reduced.

Preferably, the flange and the pulley are substantially cup-shaped and have respective end faces which are in contact with each other.

By virtue of this further characteristic, the damper is particularly compact since the assembly constituted by the flange, the elastomeric element and the flywheel mass is disposed, to advantage, within the pulley.

To advantage, the flange and the pulley of the damper can be separated to allow the pulley to be mounted without the damper if necessary for a particular application.

A further advantage of the damper according to the invention lies in the fact that the annular elastomeric element can be force-fitted between the flange and the flywheel mass without any danger of ruining the grooves in the pulley, which can be fitted on the damper unit afterwards.

Further advantages and characteristics of the device according to the invention will become clear from the detailed description given below, purely by way of non-limiting example, with reference to the appended drawings, in which:

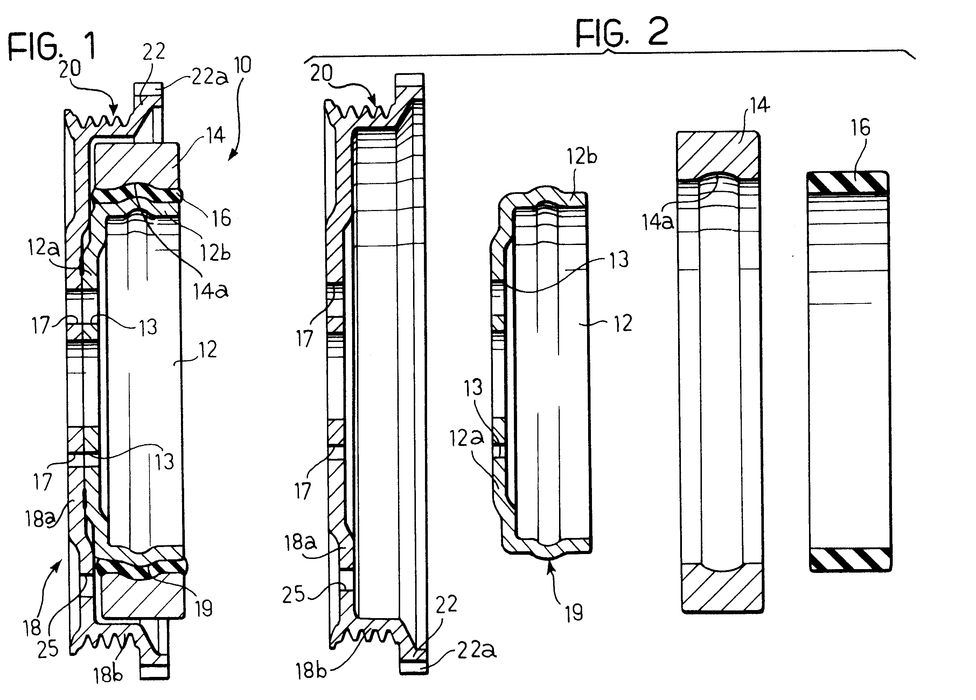

Figure 1 is a cross-section of a damper according to the invention, and

Figure 2 is a view of the damper of Figure 1 in a non-assembled configuration.

With reference to the drawings, a torsional vibration damper for fitting on the drive shaft of a motor vehicle is generally indicated 10.

The damper 10 includes a cup-shaped sheet-metal flange 12 which has an end face 12a with assembly holes 13 and a side wall 12b on which an annular, metal flywheel mass 14 is fitted coaxially, an annular element 16 of elastomeric material being force-fitted between the wall 12b and the flywheel mass 14. The end face 12a of the flange 12 is coupled with a corresponding end face 18a of a sheet-metal pulley 18 which is also cup-shaped and has a side wall 18b with a plurality of external grooves 20 for a transmission belt. The end face 18a of the pulley 20 has assembly holes 17 corresponding to the assembly holes 13 in the flange 12 and one or more holes 25 for ventilating the damper. Moreover, the pulley 18 has an outer ring 22 with a plurality of teeth 22a constituting a phonic wheel for supplying a signal, by means of a suitable sensor, to the electronic ignition device of the engine.

The outside diameter of the flywheel mass 14 is such that the assembly constituted by the flange 12, the elastomeric ring 16 and the flywheel mass 14 fits into the pulley 18 to the benefit of the compactness of the damper 10.

The flange 12 may be welded to the pulley 18 in order to facilitate assembly operations. Moreover, in order to improve the anchorage of the elastomeric element 16 to the flange 12 and to the flywheel mass 14, the flywheel mass 14 has an internal annular groove 14a the shape of which corresponds substantially to that of an annular rib 19 on the side wall 12b of the flange 12.

It is clear from the foregoing description that the vibrations induced in the flywheel mass 14 cause neither small slippages between the pulley 18 and its transmission belt nor problems of misalignment due to the thermal expansion of the elastomeric element 16.

## Claims

1. A torsional vibration damper for shafts, of the type including an annular flywheel mass connected, with the interposition of an element of elastomeric material, to a flange which can be fitted on a shaft, characterised in that it also includes a pulley (18) which is fixed firmly to the flange (12) and around which a transmission belt can pass.

2. A device according to Claim 1, characterised in that the flange (12) and the pulley (18) are substantially cup-shaped and have respective end faces (12, 18a) which are in surface contact with each other.

3. A device according to Claim 2, characterised in that the flywheel mass (14) has an outside diameter smaller than the diameter of the pulley (18), and in that the assembly constituted by the flange (12) and the flywheel mass (14) is housed at least partially within the pulley (18).

4. A device according to Claim 2 or Claim 3, characterised in that the elastomeric element (16) is force-fitted between the side wall (12b) of the flange (12) and the flywheel mass (14).

5. A device according to any one of the preceding claims, characterised in that the flange (12) and the pulley (18) can be separated.

6. A device according to Claim 2, characterised in that a side wall (12a) of the flange (12) has an annular rib (19), and in that the flywheel mass (14) has an internal annular groove (14a) of a shape substantially complementary to that of the rib (19) which, with the annular groove (14a), improves the anchorage of the annular elastomeric element (16) to the flange (12) and to the flywheel mass (14).

FIG. 1

FIG. 2

EP 0 477 146 A2